# EUROPEAN PATENT SPECIFICATION

(11) **EP 4 395 244 B1**
(45) Date of publication and mention of the grant of the patent: **03.06.2026**
(21) Application number: 21955120.7
(22) Date of filing: 23.08.2021
(51) Int. Cl.: H04L 12/10

(54) **COMMUNICATION NETWORK FOR IDENTIFYING NODES CONNECTED THERETO**
KOMMUNIKATIONSNETZWERK ZUR IDENTIFIZIERUNG VON DAMIT VERBUNDENEN KNOTEN
RÉSEAU DE COMMUNICATION D'IDENTIFICATION DES NOEUDS CONNECTÉS AUDIT RÉSEAU

(43) Date of publication of application: 03.07.2024
(73) Proprietor: Industry-Academic Cooperation Foundation Dankook University, Yongin-si, Gyeonggi-do 16890 (KR)
(72) Inventor: WOO, Samuel, Seoul 07960 (KR)
(74) Representative: Müller Schupfner & Partner Patent- und Rechtsanwaltspartnerschaft mbB (Hamburg)
(86) International application number: PCT/KR2021/011196
(87) International publication number: WO 2023/027200

(56) References cited:
- JP-A- 2011 201 527
- JP-A- H0 946 357
- KR-A- 20130 077 013
- KR-B1- 101 567 973
- US-A1- 2013 342 260
- US-A1- 2014 281 077
- US-A1- 2017 308 152
- US-A1- 2019 150 883

## Description

### Technical Field

The present disclosure relates to a communication network, and a method and device for identifying nodes connected to the communication network, and more particularly, to a communication network including nodes which output different voltage differences, and a method and device for identifying nodes using the different voltage differences between the nodes.

### Background Art

The convergence of automobiles and ICT (information and communication technologies) has been established as a new paradigm for the next-generation automobile development. For example, recently, there is a trend of installing various types of ADAS (advanced driving assist systems) in an automobile for improving driver safety and convenience.

With the increased number of electronic/electrical systems installed on an automobile, the number of electronic control units (ECUs) for implementing the electronic/electrical systems increases too.

Since the ECUs mounted on the automobile output signals to perform their assigned functions, it is necessary to manage the signals outputted by the respective ECUs and identify the ECU which has outputted the signal in order to smoothly control the automobile.

Since the transceivers included in each ECU have different unique characteristics, they have different signaling variations even when outputting the same signal (bit string). Based on such characteristics of the transceivers, the transceiver which has outputted a specific signal (i.e., the ECU which has outputted a specific signal) has conventionally been identified using the signaling deviation as a criterion.

However, in cases where the signaling deviation is analyzed using low-cost equipment, it is not possible to discern minute differences of the signaling deviations, which may cause a problem of false positive detection (a transceiver which has not outputted a specific signal is determined as one which has outputted the specific signal).

Relatively expensive separate equipment is required to discern minute differences of signaling deviations, and even if expensive equipment is used, it is difficult to guarantee its accuracy due to noise generated during the vehicle operation.

D1 (US 2013/342260 A1) discloses an input circuit arrangement designed for operation in a first or second operation mode. The arrangement comprises a connection and a detection circuit, which is coupled to the connection on the input side.

### DISCLOSURE

### Technical Problem

The present invention is defined by independent claim 1.

### Advantageous Effects

According to an embodiment of the present disclosure, minute differences of signaling deviations can be discerned without any expensive equipments, so the ECU which outputs a specific signal can be accurately identified.

Additionally, according to another embodiment of the present disclosure, an attacking ECU connected to the communication network for the purpose of an attack can be accurately identified.

Advantageous effects which can be obtained from the present disclosure are not limited to the aforementioned ones, and other advantageous effects not mentioned above can be clearly understood from the following detailed description by a person having ordinary skill in the art to which the disclosure belongs.

### Brief Description of Drawings

FIG. 1 is a diagram for explaining the overall structure of a controller area network (CAN).
FIG. 2 is a diagram for explaining the structure of an ECU corresponding to a CAN node.
FIG. 3 is a diagram for explaining a CAN transceiver.
FIG. 4 is a diagram for explaining a data frame used in a CAN.
FIG. 5 is a diagram for explaining a CAN arbitration process.
FIG. 6 is a diagram for explaining how to represent a bit in a CAN.
FIG. 7 is a block diagram of a communication network according to an embodiment of the present disclosure.
FIGS. 8A and 8B are diagrams for explaining various embodiments of a transceiver according to an embodiment of the present disclosure.
FIG. 9 is an exemplary diagram for explaining an example of adjusting a voltage difference of a signal through a transceiver of the present disclosure.
FIG. 10 is a block diagram for explaining an example of a node identification device.
FIGS. 11 and 12 are flowcharts for explaining various examples of a method for identifying a node.

### Mode for Invention

Hereinafter, embodiments of the present disclosure will be described in detail with reference to the accompanying drawings such that those of ordinary skill in the art can easily practice them.

In the drawings, in order to describe clearly the disclosure, parts not related to the description are omitted, and like reference signs will be given to like constitutional elements throughout the specification.

The terms used in the present disclosure are general terms currently widely used as many as possible while considering their functions in the present disclosure, but this may vary depending on the intentions of engineers working in the art, precedents, the emergence of new technologies, or the like. In addition, in certain cases, there are terms arbitrarily selected by the applicant, and in this case, their meanings will be described in detail in the description of the relevant disclosure. Therefore, the term used in the disclosure should be defined based on not a simple term name but the meaning of the term and the entire contents of the disclosure.

Throughout this specification, when a part "includes" or "comprises" a component, it means not that the part excludes other component, but instead that the part may further include other component unless explicitly stated to the contrary. In addition, terms such as " ... part" and " ... module" described in the specification mean a unit that processes at least one function or operation, which may be implemented in hardware or software, or a combination of hardware and software. Further, as used herein, "connecting" a part with another part may refer to a case where they are "indirectly connected" to each other with other element intervening therebetween, as well as a case where they are directly connected.

The communication network proposed through this specification may be a network that performs communication using the voltage difference between wires constituting a communication bus. The communication network of the present disclosure may be a CAN (controller area network) applied to industrial automation equipment, medical equipment, automobiles, or the like.

A method of identifying a node proposed through this specification (hereinafter referred to as "node identification method") corresponds to a method of identifying a node (target node) among a plurality of nodes connected to a communication network, which has transmitted or output a signal to wires. Additionally, a device for identifying a node (hereinafter referred to as 'node identification device') proposed through this specification corresponds to a device that is connected to a communication network and identifies a target node. The node identification method may be a method implemented within this node identification device.

Hereinafter, the present disclosure will be described focusing on the CAN, and in particular, the present disclosure will be described focusing on the CAN applied to automobiles. Therefore, in this specification, terms related to communication networks will be replaced with terms related to CAN as below.
Communication bus: CAN bus
Wires: CAN_H (CAN high) and CAN_L (CAN low)
Communication network: CAN

CAN is a multi-master serial bus protocol based on sender ID (identification). CAN has been established as an ISO international standard, and is most widely used in building in-vehicle communication networks.

CAN is a communication protocol consisting only of the physical layer and data link layer of an Open Systems Interconnection (OSI) model. The physical layer is divided into High Speed CAN and Low Speed CAN according to communication speed, and in this specification, the present disclosure will be described based on the High Speed CAN.

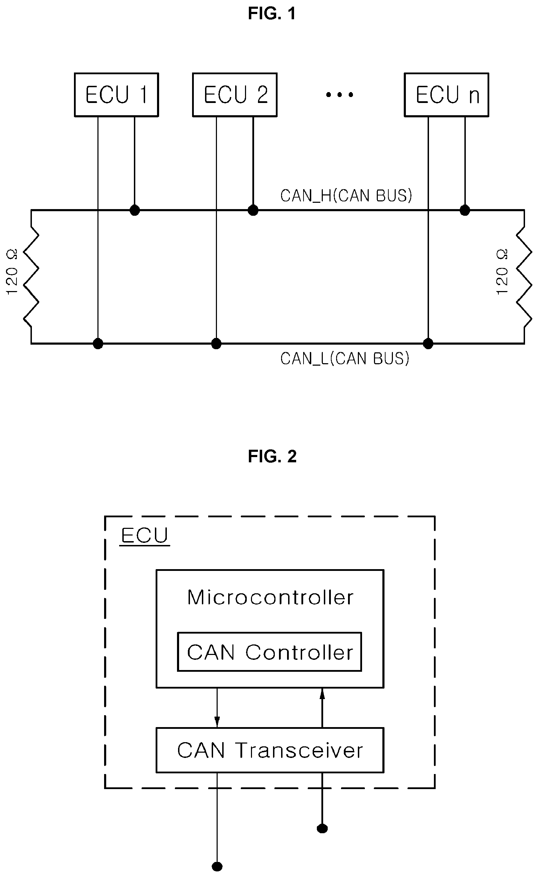

The overall structure of the CAN is shown in FIG. 1. As shown in FIG. 1, a CAN bus may be configured with two communication lines and termination resistors connected to opposite ends of the two communication lines. The two communication lines may be divided into CAN_H and CAN_L, and one or more ECUs (electronic control units), each of which constitutes the node, may be connected to the CAN_H and the CAN_L, respectively.

As shown in FIG. 2, the ECUs connected to the CAN bus may be configured to include a microcontroller, a CAN controller, and a CAN transceiver.

The CAN controller may perform tasks that occur at the data link layer. Specifically, the CAN controller may determine whether the message (received message) delivered from a CAN transceiver is valid data, and then, if it is valid data, deliver it to the microcontroller. Additionally, the CAN controller may deliver to the CAN transceiver the message (transmitted message) that the microcontroller wants to deliver.

The CAN transceiver may perform tasks related to the physical layer. Specifically, the CAN transceiver may convert the transmitted and received messages delivered from the CAN bus or microcontroller into electrical signals. In other words, the CAN transceiver may convert data delivered from the microcontroller into data for CAN communication, and may convert data for CAN communication delivered from the CAN bus into data for reception of the microcontroller.

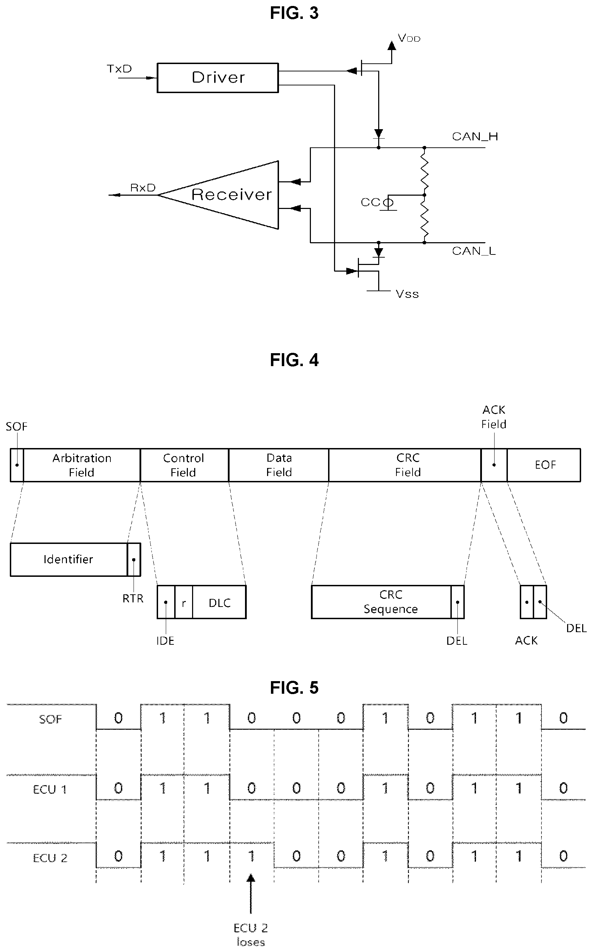

An example of a CAN transceiver is shown in FIG. 3. The CAN transceiver may represent bits on the CAN bus, and may sample bits from the CAN bus. Here, representing a bit may refer to transmitting a bit, and sampling a bit may refer to receiving a bit.

The CAN transceiver may transmit bits to the CAN bus using a TX-driver (Driver) and switching elements, and receive bits using a receiver. When transmitting data from the microcontroller, a data frame may be created in the CAN controller and then be delivered 1 bit at a time to the CAN transceiver.

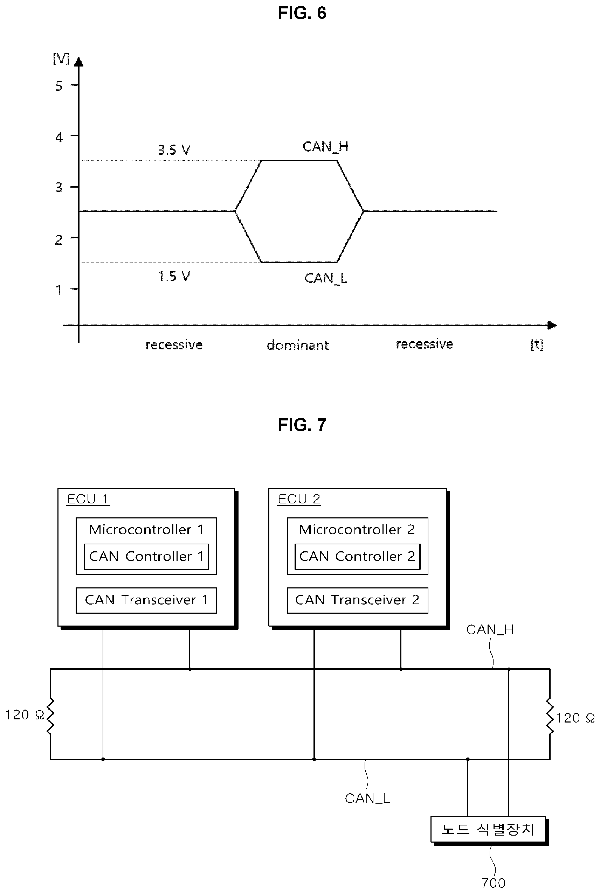

When representing a dominant bit (bit '0') on the CAN bus, the CAN controller inputs '0' to the TX driver of the CAN transceiver, and in response to this, the TX driver outputs '1'. At this time, the two switches included in the CAN transceiver are turned on to output V_{DD} and V_{SS}. Therefore, as shown in FIG. 6, a voltage of 3.5 [V] is applied to the CAN_H, and a voltage of 1.5 [V] is applied to the CAN_L. As a result, a voltage difference of 2[V] occurs between the CAN_H and the CAN_L, and the dominant bit is represented on the CAN bus.

When representing a recessive bit (bit '1') on the CAN bus, the CAN controller inputs '1' to the TX driver of the CAN transceiver, and in response to this, the TX driver outputs '0'. At this time, the two switches included in the CAN transceiver are turned off, and so a voltage difference of 0 [V] occurs between the CAN_H and the CAN_L as shown in FIG. 6 to represent the recessive bit on the CAN bus.

The CAN may perform communication using various messages such as data frames, remote frames, error frames, overload frames, and the like. An example of a data frame used in the CAN is shown in FIG. 4.

The data frame may include an SOF (start of frame), an arbitration field, a control field, a data field, a CRC field (cyclic redundancy check field), an ACK field (acknowledge field), and an EOF (end of frame), and an INT (intermission) field.

The SOF includes one dominant bit, indicates the beginning of the message, and is used for node synchronization.

The arbitration field is used to mediate conflicts between messages when message transmission occurs simultaneously at two or more nodes. As shown in FIG. 4, the arbitration field includes an identifier (ID) having a size of 11 bits or 29 bits and a remote transmission request (RTR) field having a size of 1 bit or 3 bits. The value of the RTR bit in the RTR field is used to determine whether that frame is a data frame (bit value 0) or a remote frame (bit value 1).

The control field is configured to include an identifier extension (IDE) bit and a data length code (DLC) bit. The IDE bit is used to distinguish between standard frames and extended frames, and the DLC bit is used to indicate the number of bytes of the data field.

The data field may be used to deliver information from one node to another, and may contain data having a size ranging from 0 byte to 8 bytes.

The CRC field is used to check for errors in the message, and includes a CRC delimiter (DEL) and a CRC sequence generated using a bit string from the SOF to the data field.

All CAN controllers that correctly receive the message set the value of the ACK bit to '0' and transmit it. The node which has transmitted the message checks for the presence of the ACK bit, and retries transmission if the ACK bit is not found.

The EOF includes seven recessive bits, and is used to indicate the end of the message. The INT field includes three recessive bits, and indicates the idle time until the next arbitration process.

An example to explain the CAN arbitration process is shown in FIG. 5. When multiple nodes attempt to transmit a message at the same time, the arbitration process is performed, and the node with the highest priority determined through the arbitration process transmits the message first.

The arbitration process is performed based on CAN's wired AND configuration characteristics. For example, it may be assumed that node 1 (ECU 1) and node 2 (ECU 2) are trying to transmit a message at the same time, and the ID of node 1 is '10011111111' and the ID of ECU 2 is '11011111111'. After the SOF, node 1 and node 2 transmit ID in 1-bit units to the CAN bus. When transmitting the second bit in the ID, node 1 outputs a recessive bit and node 2 outputs a dominant bit, so only the dominant bit outputted by node 2 is represented on the CAN bus due to the wired AND configuration characteristic. At this time, node 2 is switched to a receiving mode.

### Example 1 - CAN

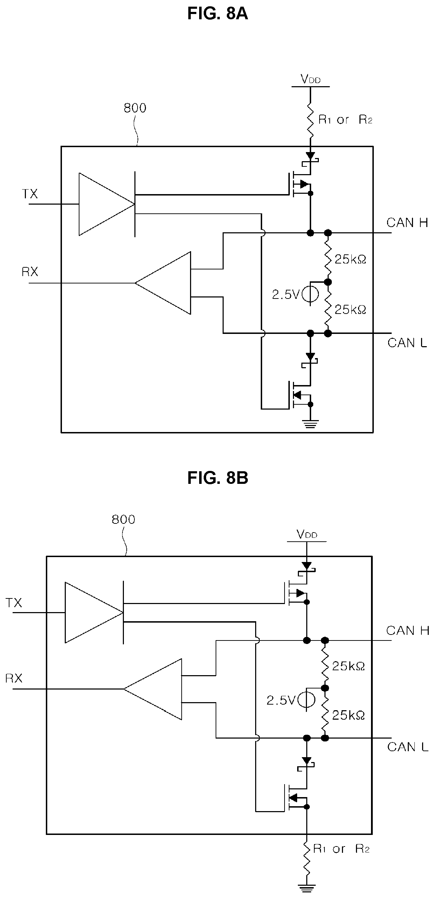

An example of a communication network (CAN) of the disclosure is shown in FIG. 7, and examples of a transceiver of the present disclosure are shown in FIGS. 8A and 8B.

As shown in FIG. 7, the CAN may be configured to include a first ECU (ECU 1), a second ECU (ECU 2), and a CAN bus (CAN_H, CAN_L, and termination resistors (120 Ω)). According to an embodiment, the CAN may be configured to further include a node identification device 700.

Although only two ECUs (the first ECU and the second ECU) are shown in FIG. 7, the number of ECUs may be three or more. That is, the CAN of the present disclosure may include any case where there are a plurality of ECUs connected to the CAN bus.

The first ECU may be configured to include a first microcontroller (Microcontroller 1), a first CAN controller (CAN Controller 1), and a first transceiver (CAN Transceiver 1). The first ECU may be electrically connected to the CAN bus through the first transceiver.

The second ECU may be configured to include a second microcontroller (Microcontroller 2), a second CAN controller (CAN Controller 2), and a second transceiver (CAN Transceiver 2). The second ECU may be electrically connected to the CAN bus through the second transceiver.

As shown in FIGS. 8A and 8B, the first transceiver and the second transceiver may be configured to include resistors R1 and R2 and a processing part 800.

The processing part 800 can generate a voltage difference between the CAN_H and the CAN_L to represent (output) bits on the CAN bus. Also, the processing part 800 may receive, through the CAN bus, bits transmitted by the other ECU. When the processing part 800 is included in the first transceiver, it may be referred to as a first processing part, and when the processing part 800 is included in the second transceiver, it may be referred to as a second processing part.

Among the resistors R1 and R2, the R1 represents the resistor included in the first transceiver, and the R2 represents the resistor included in the second transceiver. The resistors R1 and R2 may distribute a portion of the power supply voltage V_{DD}. For example, the power supply voltage (V_{DD}, first power supply voltage) applied to the first transceiver may be distributed 'between the CAN_H and the CAN_L' and to the resistor R1, and the power supply voltage (V_{DD}, second power supply voltage) applied to the second transceiver may be distributed 'between the CAN_H and the CAN_L' and to the resistor R2.

Therefore, compared to the conventional transceiver that does not include the resistors R1 and R2, the transceiver according to the present disclosure can reduce the magnitude of the voltage applied between the CAN_H and the CAN_L by the magnitude of the voltage distributed to the resistors R1 and R2.

The resistors R1 and R2 may be placed between the power supply terminal to which the power supply voltage is applied and the processing part 800, or may be placed at a lower side of the processing part 800. For example, as shown in FIG. 8A, the resistor R1 or R2 may be placed between the power supply terminal to which the power supply voltage V_{DD} is applied and the processing part 800, that is, on the upper side of the processing part 800. In another example, as shown in FIG. 8B, the resistor R1 or R2 may also be placed on the lower side of the processing part 800.

The resistor R1 and resistor R2 may have different resistance values. Therefore, the voltage value distributed to the resistor R1 and the voltage value distributed to the resistor R2 are different from each other, and as a result, the voltage value (voltage difference) applied between the CAN_H and the CAN_L of the first transceiver and the voltage value (voltage difference) applied between the CAN_H and the CAN_L of the second transceiver are also different from each other.

That is, the first transceiver and the second transceiver can be distinguished from each other through the voltage differences between the CAN_H and the CAN_L. Therefore, as will be described later, the node identification device 700 can identify one among the first transceiver and the second transceiver which outputs the signal, based on the voltage differences between the CAN_H and the CAN_L.

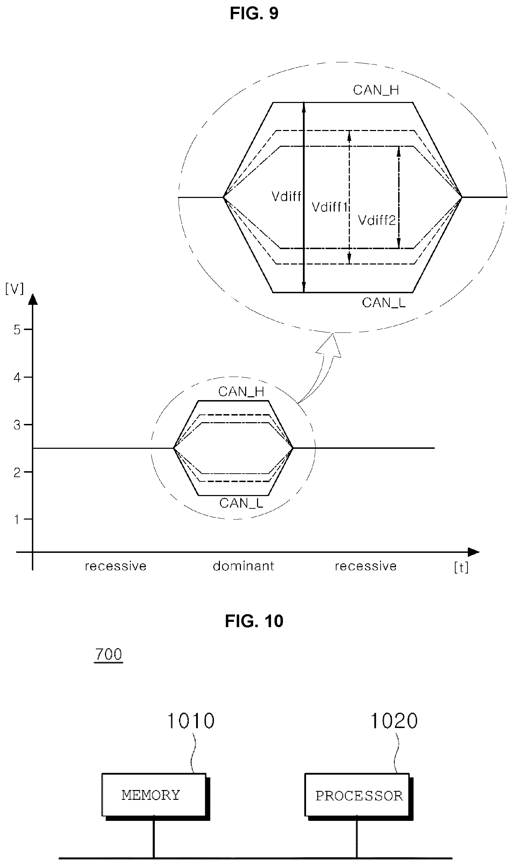

An example of comparing the voltage difference generated between the CAN_H and the CAN_L by the first transceiver and the voltage difference generated between the CAN_H and the CAN_L by the second transceiver is shown in FIG. 9.

In the example of FIG. 9, it is assumed that the magnitude of the resistor R1 included in the first transceiver is less than the magnitude of the resistor R2 included in the second transceiver. In FIG. 9, the solid line graph represents the voltage difference V_{diff} generated between the CAN_H and the CAN_L by a conventional transceiver; the broken line graph represents the voltage difference V_{diff1} generated between the CAN_H and the CAN_L by the first transceiver;
and the one-dot chain line graph represents the voltage difference V_{diff2} generated between the CAN_H and the CAN_L by the second transceiver.

Since part of the power supply voltage is distributed to the resistor R1, the V_{diff1} represents a relatively small value compared to the V_{diff}. Since part of the power supply voltage is distributed to the resistor R2, and the value of the voltage distributed to the resistor R2 is greater than the value of the voltage distributed to the resistor R1 (R1<R2), the V_{diff2} indicates a relatively small value compared to the V_{diff1} and the V_{diff}.

As described above, in the example of FIG. 9, it is assumed that the magnitude of the resistor R1 included in the first transceiver is less than the magnitude of the resistor R2 included in the second transceiver. Therefore, the V_{diff1} has a relatively large value compared to the V_{diff2}. If the magnitude of the R1 is larger than the magnitude of the R2, the V_{diff1} would have a relatively small value compared to the V_{diff2}.

As described above, according to the transceiver structure of the present disclosure, the voltage differences of the bits (e.g., dominant bits) outputted from the respective different transceivers are different from each other. Therefore, by using different voltage differences, different transceivers can be distinguished or identified without employing any expensive equipment, and the accuracy of distinction or identification can be robust against the noises generated during the vehicle operation.

### Example 2 - Method and device for identifying nodes

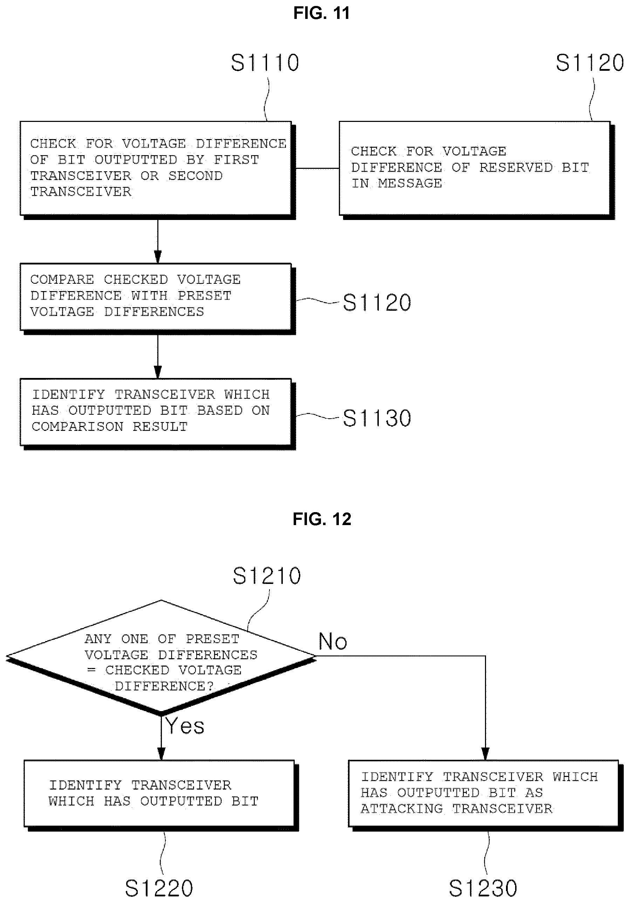

A block diagram for explaining an example of a node identification device 700 is shown in FIG. 10, and flow charts for explaining various examples of a node identification method are shown in FIGS. 11 and 12.

As shown in FIG. 7, the node identification device 700 may be connected to or included in the previously described CAN. As shown in FIG. 10, the node identification device 700 may be configured to include a memory 1010 and a processor 1020.

One or more programs for identifying nodes may be stored in the memory 1010. Additionally, voltage differences (preset voltage differences) of bits outputted by the respective transceivers may be stored in advance in the memory 1010.

The processor 1020 may execute the programs stored in the memory 1010 and identify the nodes as follows.

First, the processor 1020 may check for the voltage difference of the bit (e.g., dominant bit) outputted by the first transceiver or the second transceiver (S1110). Here, the voltage difference may be any one of the V_{diff1} and the V_{diff2} described above, or may be a voltage difference having a different value from the V_{diff1} and the V_{diff2}.

According to an embodiment, the processor 1020 may also check for the voltage difference of any one of the reserved bits in the message outputted by the first transceiver or the second transceiver (S1120).

As shown in FIG. 4, there may be a reserved bit having a size of 2 bits and an RTR bit having a size of 1 bit in the RTR field, and this reserved bit is located after the ID field and the RTR bit. Therefore, in cases where the voltage difference of any one of the reserved bits is checked for, it is possible to secure sufficient time for checking for the voltage difference.

After the voltage difference is checked for, the processor 1020 may compare the checked voltage difference with the preset voltage differences (S1120). Additionally, the processor 1020 may identify the transceiver which has outputted the bit based on the comparison result (S1130).

Identifying a transceiver may include 'determining which transceiver has outputted the bit among the first transceiver and the second transceiver' and 'determining whether the transceiver which has outputted the bit corresponds to an attacking transceiver (attacking node) for attacking the CAN.

For example, as illustrated in FIG. 12, the processor 1020 may compare the checked voltage difference with any one of the preset voltage differences (S1210), and if the checked voltage difference corresponds to any one of the preset voltage differences (Yes), the processor may determine which transceiver among the first transceiver and the second transceiver has outputted the corresponding bit (S1220).

The case where any one of the preset voltage differences corresponds to the checked voltage difference may include a case where the checked voltage difference is equal to any one of the preset voltage differences or exists within a certain range.

In another example, the processor 1020 may compare the checked voltage difference with any one of the preset voltage differences (S1210), and if the checked voltage difference does not correspond to any one of the preset voltage differences (No), the processor may determine that the transceiver which has outputted the corresponding bit corresponds to the attacking transceiver (S1230).

If the checked voltage difference does not correspond to any one of the preset voltage differences, it may mean that the transceiver (ECU) which has outputted the corresponding bit does not include a preset resistor or includes a resistor having a resistance value different from the preset resistance value. In other words, it means that this transceiver does not correspond to the transceiver designed to be connected to the CAN.

The case where any one of the preset voltage differences does not correspond to the checked voltage difference may include a case where the checked voltage difference is not equal to any one of the preset voltage differences or does not exist within a certain range.

According to the node identification method described above, minute differences of signaling deviations can be discerned without any expensive equipments, so the ECU which outputs a specific signal can be accurately identified. Additionally, according to the node identification method, an attacking ECU connected to the communication network for the purpose of an attack can be accurately identified.

The aforementioned description of the present disclosure is just an example, and a person having ordinary skill in the art to which the present disclosure pertains may understand that it can be easily modified into other specific configuration without changing the technical idea or essential features of the present disclosure. Accordingly, it should be understood that the embodiments described above are illustrative and not restrictive in every respect.

For example, the respective components described as a singular form may be implemented in a distributed form, and likewise the respective components described as a distributed form may be implemented in a combined form.

The scope of the disclosure is defined by the following claims rather than the detailed description, and all changed or modified forms derived from the meaning and scope of the claims and equivalents thereto should be interpreted as being included in the scope of the disclosure.

Meanwhile, the processes shown in FIGS. 8A, 8B, 9A, 9B, 11A, and 11B can be implemented as computer-readable codes on a computer-readable recording medium. Examples of the computer-readable recording medium include all types of recording devices that store data which can be read by a computer system. In other words, the computer-readable recording media may be non-transitory media such as ROM, RAM, CD-ROM, magnetic tape, floppy disk, and optical data storage devices, and may also further include transitory media such as carrier waves (e.g., transmission via the Internet) and data transmission medium. Additionally, the computer-readable recording media may be distributed across computer systems connected to a network, so that the computer-readable codes may be stored and executed in a distributed manner.

## Claims

1. A communication network which performs communication using a voltage difference between wires constituting a communication bus, the communication network comprising:
the wires;
a first transceiver connected to the wires, including a first processing part (800) configured to generate a voltage difference between the wires to represent a bit on the communication bus, and a first resistor (R1) disposed between a power supply terminal to which a first power supply voltage is applied and the first processing part (800), or on a lower side of the first processing part (800), across which a portion of the first power supply voltage is distributed; and
a second transceiver connected to the wires, including a second processing part configured to generate a voltage difference between the wires to represent a bit on the communication bus, and a second resistor (R2) disposed between a power supply terminal to which a second power supply voltage is applied and the second processing part, or on a lower side of the second processing part, across which a portion of the second power supply voltage is distributed,
wherein the first resistor has a different value from the second resistor, and
**characterized in that** the bits outputted from the first transceiver and the second transceiver respectively have different voltage differences due to a reduction in voltage magnitude caused by the first resistor and the second resistor.

## Patentansprüche

1. Ein Kommunikationsnetzwerk, das die Kommunikation unter Verwendung einer Spannungsdifferenz zwischen Leitungen durchführt, die einen Kommunikationsbus bilden, wobei das Kommunikationsnetzwerk umfasst:
die Leitungen;
einen ersten Transceiver, der mit den Leitungen verbunden ist, einschließlich eines ersten Verarbeitungsteils (800) konfiguriert um eine Spannungsdifferenz zwischen den Leitungen zu erzeugen um ein Bit auf dem Kommunikationsbus darzustellen, und einen ersten Widerstand (R1), der zwischen einem Stromversorgungsanschluss, an den eine erste Stromversorgungsspannung angelegt ist, und dem ersten Verarbeitungsteil (800) oder an einer unteren Seite des ersten Verarbeitungsteils (800) angeordnet ist, über den ein Teil der ersten Stromversorgungsspannung verteilt ist; und
einen zweiten Transceiver, der mit den Leitungen verbunden ist, einschließlich eines zweiten Verarbeitungsteils konfiguriert um eine Spannungsdifferenz zwischen den Leitungen zu erzeugen um ein Bit auf dem Kommunikationsbus darzustellen, und einen zweiten Widerstands (R2), der zwischen einem Stromversorgungsanschluss, an den eine zweite Stromversorgungsspannung angelegt wird, und dem zweiten Verarbeitungsteil oder an einer unteren Seite des zweiten Verarbeitungsteils angeordnet ist, über den ein Teil der zweiten Stromversorgungsspannung verteilt ist, wobei der erste Widerstand einen anderen Wert als der zweite Widerstand aufweist, und **dadurch gekennzeichnet, dass** die jeweils vom ersten Transceiver und vom zweiten Transceiver ausgegebenen Bits unterschiedliche Spannungsdifferenzen aufweisen, die auf eine durch den ersten Widerstand und den zweiten Widerstand verursachte Verringerung des Spannungsbetrags zurückzuführen sind.

## Revendications

1. - Réseau de communication qui effectue une communication en utilisant une différence de tension entre des fils constituant un bus de communication, le réseau de communication comprenant :
les fils ;
un premier émetteur-récepteur connecté aux fils, comprenant une première partie de traitement (800) configurée pour générer une différence de tension entre les fils afin de représenter un bit sur le bus de communication, et une première résistance (R1) disposée entre une borne d'alimentation électrique à laquelle une première tension de d'alimentation électrique est appliquée et la première partie de traitement (800), ou sur un côté inférieur de la première partie de traitement (800), à travers laquelle une partie de la première tension d'alimentation électrique est distribuée ; et
un second émetteur-récepteur connecté aux fils, comprenant une seconde partie de traitement configurée pour générer une différence de tension entre les fils afin de représenter un bit sur le bus de communication, et une seconde résistance (R2) disposée entre une borne d'alimentation électrique à laquelle une seconde tension d'alimentation électrique est appliquée et la seconde partie de traitement, ou sur un côté inférieur de la seconde partie de traitement, à travers laquelle une partie de la seconde tension d'alimentation électrique est distribuée,
dans lequel la première résistance a une valeur différente de la seconde résistance, et
**caractérisé par le fait que** les bits délivrés respectivement par le premier émetteur-récepteur et le second émetteur-récepteur ont des différences de tension différentes dues à une réduction en amplitude de tension provoquée par la première résistance et la seconde résistance.
